Europäisches Patentamt

European Patent Office

Office européen des brevets

(11) Numéro de publication: **0 376 794**
**A1**

## (12) DEMANDE DE BREVET EUROPEEN

(21) Numéro de dépôt: 89403523.7

(22) Date de dépôt: **18.12.89**

(51) Int. Cl.⁵: **F41H 5/04, B32B 18/00,**
**C04B 35/80**

(30) Priorité: **19.12.88 FR 8816753**

(43) Date de publication de la demande:
**04.07.90 Bulletin 90/27**

(84) Etats contractants désignés:
**BE CH DE ES GB IT LI NL SE**

(71) Demandeur: **SOCIETE EUROPEENNE DE PROPULSION**
**24 rue Simon de Rothschild**
**F-92150 Suresnes(FR)**

(72) Inventeur: **Vives, Michel**
**24, rue des Houx Le Taillan Médoc**
**F-33320 Eysines(FR)**
Inventeur: **Taveau, Pierre**
**27, rue Lafon Feline**
**F-33110 Le Bouscat(FR)**
Inventeur: **Etienne, Jacques**
**50 Chemin de Mathiadeux**
**F-33320 Eysines(FR)**
Inventeur: **Remillieux, Yves**
**18 avenue Marceau**
**F-91190 Gif Sur Yvette(FR)**
Inventeur: **Charbonnel, Lucien**
**49 Route de Courson**
**F-91530 St Maurice Montcouronne(FR)**

(74) Mandataire: **Joly, Jean-Jacques et al**
**CABINET BEAU DE LOMENIE 55, rue d'Amsterdam**
**F-75008 Paris(FR)**

(54) **Matériau de protection à structure céramique multi-couches.**

(57) Les éléments (14) en céramique frittée sont associés à au moins une couche de matériau composite à texture de renfort fibreuse et matrice céramique (12) disposée derrière les éléments en céramique frittée.

FIG.1

## Matériau de protection à structure céramique multi-couches

La présente invention concerne un matériau de protection à structure céramique multi-couches.

Le domaine d'application de l'invention est plus particulièrement celui des matériaux de protection de machines ou de personnes contre les projectiles.

L'utilisation des céramiques dans les matériaux de protection est bien connue. Elles permettent d'atteindre les meilleures performances balistiques pour des projectiles de vitesse supérieure à 500 m/s. En effet, des céramiques frittées telles que l'alumine, le carbure de bore et le carbure de silicium ont une porosité presque nulle et des propriétés de dureté et de résistance à la compression qui permettent de briser le noyau du projectile.

Toutefois, les céramiques frittées sont très fragiles au choc, de sorte qu'une plaque en céramique frittée est brisée dès le premier impact de projectile. Pour limiter l'effet destructeur de l'impact, les matériaux de protections sont généralement constitués de tuiles ou plaquettes en céramique frittée accolées les unes aux autres et fixées sur une texture de base. Celle-ci est formée le plus souvent de couches de tissu par exemple en fibres aramide, telles que les fibres en "Kevlar", qui forment une texture résistant à la pénétration en absorbant, par sa déformation, l'énergie cinétique résiduelle du projectile brisé par la couche frontale en céramique.

La présente invention a pour but de fournir un matériau de protection à structure céramique multi-couches ayant des propriétés améliorées par rapport aux matériaux connus.

Ce but est atteint au moyen d'un matériau de protection comprenant des éléments en céramique frittée lesquels, conformément à l'invention, sont associés à un matériau composite à matrice céramique au moins en partie disposé derrière les éléments en céramique frittée.

Les matériaux composites à matrice céramique (CMC) sont formés par une texture de renfort fibreuse densifiée par une matrice céramique. La texture de renfort est constituée par exemple par des couches de tissu en fibres réfractaires telles que des fibres en carbone ou en céramique. La matrice céramique est infiltrée au sein de la porosité de la texture de renfort. La matrice est formée par infiltration chimique en phase vapeur, ou par imprégnation liquide au moyen d'un précurseur du matériau céramique de la matrice suivie par un traitement de transformation du précurseur en céramique. Des procédés de fabrication de CMC ayant une matrice en carbure (par exemple carbure de silicium) ou en oxyde (par exemple alumine ou zircone) sont décrits notamment dans les brevets FR 77 26 979 (publication No 2 401 888) et EP 0 085 601.

Les CMC ont des propriétés de dureté et de résistance en compression, avec une porosité résiduelle généralement de 10 à 15 % en volume, qui permettent aussi de briser le noyau d'un projectile de vitesse supérieure à 500 m/s, comme les céramiques frittées. Par rapport à celles-ci, les CMC présentent les avantages de supporter plusieurs impacts sans destruction totale, de permettre la réalisation de grandes pièces en forme, de pouvoir supporter une utilisation structurale à des températures supérieures à 400° C et de présenter une densité inférieure (2,5 pour un matériau composite SiC-SiC contre 3,6 pour une alumine frittée).

Toutefois, les CMC ont l'inconvénient d'être actuellement plus difficiles à densifier à partir d'une épaisseur de 10 mm, ce qui peut être insuffisant pour absorber l'énergie cinétique d'un projectile. L'association de CMC avec des éléments en céramique frittée dans le matériau de protection conforme à l'invention permet de pallier cet inconvénient.

En outre, les CMC présentent une déformabilité, par effondrement de la porosité et fléchissement des fibres de la texture de renfort à l'impact, qui permet d'absorber l'énergie cinétique du projectile avec une très faible déformation en face arrière du matériau de protection. Il s'agit là d'un avantage significatif par rapport aux matériaux connus comprenant des couches de tissu à l'arrière de la couche frontale en céramique, car l'impact d'un projectile induit dans ces matériaux connus une déformation relativement importante de la face arrière ce qui, dans certains cas, peut gravement amoindrir l'effet de protection.

Différents modes de réalisation d'un matériau de protection conforme à l'invention seront décrits ci-après, à titre indicatif mais non limitatif, en référence aux dessins annexés sur lesquels :

- la figure 1 est une vue en coupe d'un premier mode de réalisation d'un matériau de protection conforme à l'invention comprenant des éléments en céramique frittée collés en face avant d'une couche de CMC ;

- les figures 2 et 3 illustrent la réalisation d'une autre structure de matériau de protection conforme à l'invention comprenant des picots implantés en céramique frittée ;

- les figures 4 et 5 sont des vues en coupe illustrant d'autres modes de réalisation d'un matériau de protection conforme à l'invention comprenant des éléments en céramique frittée insérés en face avant d'une couche de CMC ;

- les figures 6 à 8 sont des vues en coupe illustrant encore d'autres modes de réalisation d'un matériau de protection conforme à l'invention comprenant des éléments en céramique frittée insérés au sein d'une couche de CMC ; et

- la figure 9 est une vue en coupe illustrant un mode de réalisation d'un matériau de protection conforme à l'invention comprenant des éléments en céramique frittée disposés dans toute l'épaisseur d'une couche de CMC.

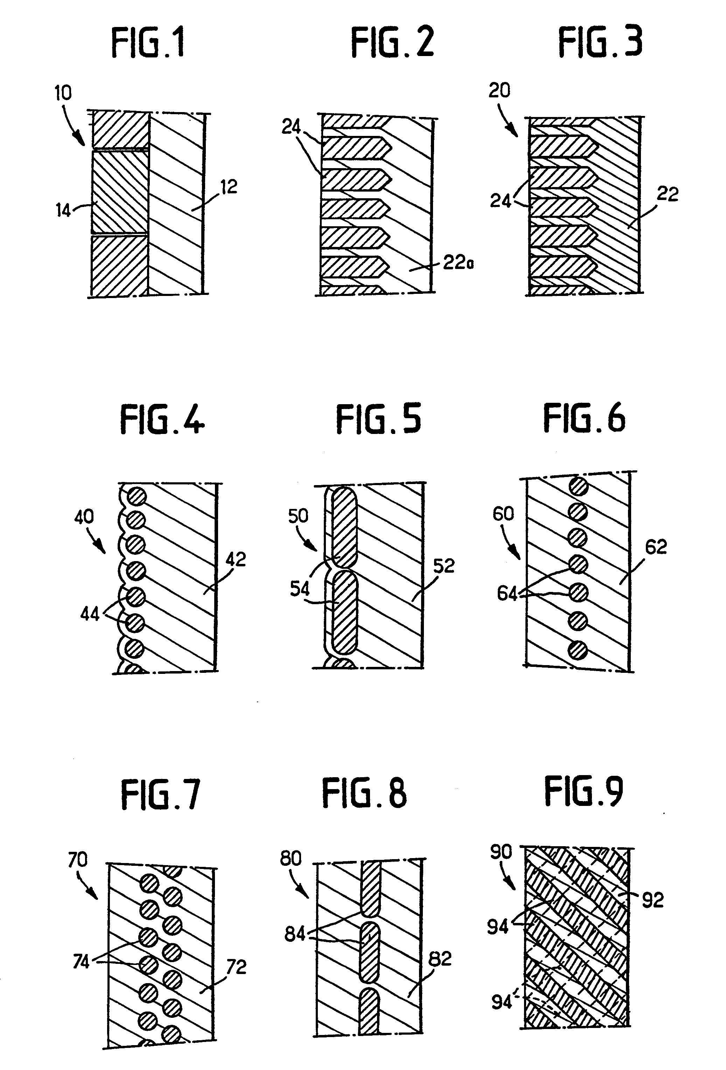

Le matériau de protection 10 représenté par la figure 1 comprend une couche arrière 12 en CMC et une couche avant formée de plaquettes juxtaposées 14 en céramique frittée fixées sur la face avant de la couche 12. La couche 12 est par exemple en un composite de type carbone-céramique avec une texture de renfort en fibres de carbone et une matrice céramique. La texture en fibres de carbone est constituée avantageusement d'un empilement de strates de tissus parallèles aux faces de la couche 12. L'infiltration du matériau céramique de la matrice au sein de la porosité de la texture de renfort est réalisée par infiltration en phase vapeur, les strates de tissu étant maintenues par un outillage. Le matériau céramique de la matrice est par exemple du carbure de silicium (SiC). Un procédé d'infiltration de SiC en phase vapeur est décrit dans le brevet FR 77 26 979 précité. L'infiltration est poursuivie jusqu'à aboutir à une porosité résiduelle de préférence inférieure à 15 %.

En variante, la couche 12 peut être en un composite de type céramique-céramique, par exemple de type SiC-SiC. La texture de renfort est formée de strates de tissu en fibres SiC et est densifiée par infiltration de SiC en phase vapeur.

Toujours en variante, des céramiques autres que le carbure de silicium, par exemple l'alumine, la zircone ou le carbure de bore, peuvent être utilisées pour former la matrice des matériaux composites carbone-céramique ou céramique-céramique, ou pour former les fibres de la texture de renfort du matériau composite céramique-céramique.

Les plaquettes 14 en céramique frittée sont par exemple en carbure de silicium, en alumine ou en carbure de bore. Elles sont disposées côte à côte et fixées sur la face avant de la couche 12 en CMC par collage. Le collage de plaquettes en SiC sur une couche en matériau composite de type C-SiC ou SiC-SiC est réalisé par exemple au moyen de résines de type époxy. De préférence, une même céramique est utilisée pour former la matrice de la couche 12 en CMC et les plaquettes 14.

Des matériaux de protection en forme sont réalisés par collage des plaquettes 14 en céramique frittée sur une couche arrière 12 ayant la forme désirée. Ceci est obtenu en réalisant la couche 12 par densification d'une texture de renfort mise en forme.

Selon l'application envisagée, l'assemblage constitué par la couche arrière 12 en CMC et les plaquettes frontales 14 en céramique frittée peut être complété en face avant ou en face arrière par des revêtements destinés à assurer différentes fonctions telles que : discrétion radar et infrarouge, camouflage (peinture en face avant), étanchéité, continuité électrique, protection anti-éclats. Si l'application envisagée l'exige, le matériau de protection est fixé sur une structure à protéger au moyen par exemple d'un revêtement composite entourant tout ou partie du matériau de protection en formant des éléments de fixation par exemple latéralement. Un tel revêtement peut également avoir une fonction anti-éclats.

Le comportement du matériau de protection illustré par la figure 1 en cas d'impact par un projectile est le suivant. Les plaquettes 14 en céramique frittée brisent le noyau du projectile. L'énergie cinétique résiduelle de celui-ci est absorbée par la couche 12 en CMC notamment par effondrement local de la porosité et fléchissement des fibres de la texture de renfort, sans induire de déformation importante en face arrière.

Bien que l'on ait envisagé ci-avant un matériau de protection à deux couches en céramique, le nombre de celles-ci pourra être augmenté, par exemple en superposant plusieurs couches en CMC à l'arrière des plaquettes 14, ou en disposant celles-ci en sandwich entre deux couches en CMC.

Les figures 2 et 3 illustrent un autre mode de réalisation d'un matériau de protection 20 conforme à l'invention dans lequel les éléments en céramique frittée sont sous forme de picots 24 insérés en partie avant d'une couche en CMC. Après réalisation de la texture de renfort fibreux 22a de la couche 22, les picots 24 sont implantés dans la texture sèche 22a, à partir de sa face avant (figure 2). Après mise en place des picots 24, l'ensemble est densifié par infiltration du matériau céramique constitutif de la matrice de la couche 22 en CMC, ce qui immobilise les picots 24 au sein de celle-ci (figure 3).

Les figures 4 et 5 illustrent d'autres matériaux de protection 40, 50 conformes à l'invention dans lesquels les éléments en céramique frittée sont des inserts en forme de billes 44 ou de plaquettes 54 insérées côte à côte dans la couche en CMC, respectivement 42, 52, à proximité de la face avant de celle-ci. Les billes 44 pourraient être remplacées par des tiges cylindriques disposées côte à côte parallèlement à la face avant du matériau. Ces inserts sont mis en place dans la structure de renfort, avant densification par infiltration en phase vapeur du matériau céramique de la matrice. La mise en place des inserts est réalisée dans des poches obtenues par tissage de la texture de renfort.

Les figures 6, 7, 8 illustrent encore d'autres matériaux de protection 60, 70, 80 conformes à l'invention dans lesquels des inserts 64, 74, 84 en forme de billes ou cylindres (figures 6, 7) ou en forme de plaques (figure 8) sont mis en place côte à côte en une couche (figures 6, 8) ou plusieurs couches (figure 7) dans la partie centrale de la couche en CMC 62, 72, 82 entre ses faces avant et arrière. Comme précédemment indiqué, les inserts 64, 74, 84 sont logés dans des poches obtenues par tissage de la texture de renfort de la couche en CMC, avant densification de la texture de renfort.

Enfin, la figure 9 illustre un matériau de protection 90 conforme à l'invention dans lequel les éléments en céramique frittée sont constitués par des picots 94 qui traversent la couche de CMC dans toute son épaisseur de la face avant à la face arrière. Les picots 94 sont disposés en direction inclinée par rapport à la normale aux faces de la couche 92. De préférence, les picots sont disposés suivant deux directions différentes symétriques l'une de l'autre par rapport à cette normale. L'implantation des picots 94 est réalisée dans la texture de renfort fibreux de la couche en CMC, avant infiltration du matériau constitutif de la matrice.

De préférence, dans les différents modes de réalisation illustrés par les figures 2 à 9, une même céramique est utilisée pour la matrice de la couche en CMC et pour la réalisation des inserts.

Dans tous les modes de réalisation ci-dessus, on retrouve une caractéristique de l'invention qui consiste en ce que, entre la face avant du matériau de protection exposée à l'impact d'un projectile et la face arrière, sont disposées au moins une couche d'éléments en céramique frittée et, directement ou non derrière elle celle-ci, au moins une couche en CMC.

**Revendications**

1. Matériau de protection céramique multi-couches comprenant des éléments en céramique frittée, caractérisé en ce que lesdits éléments (14, 24, 44, 54, 64, 74, 84, 94) sont associés à au moins une couche de matériau composite à texture de renfort fibreuse et matrice céramique (12, 22, 42, 52, 62, 72, 82, 92) au moins en partie disposée derrière les éléments en céramique frittée.

2. Matériau de protection selon la revendication 1, caractérisé en ce que les éléments en céramique frittée sont des plaquettes (14) collées sur la face avant d'une couche (12) en matériau composite à matrice céramique.

3. Matériau de protection selon la revendication 1, caractérisé en ce que les éléments en céramique frittée sont des inserts (24, 44, 54, 64, 74, 84, 94) mis en place dans la texture de renfort fibreuse du matériau composite (22, 42, 52, 62, 72, 82, 92), avant densification de la texture par la matrice céramique.

4. Matériau de protection selon la revendication 3, caractérisé en ce que les inserts (24, 44, 54) sont situés dans la couche de matériau composite, à proximité de la face avant de celle-ci.

5. Matériau de protection selon la revendication 3, caractérisé en ce que les inserts (64, 74, 84) sont situés au sein de la couche de matériau composite dans la partie centrale de celle-ci, entre ses faces avant et arrière.

6. Matériau de protection selon la revendication 3, caractérisé en ce que les inserts (94) s'étendent dans toute l'épaisseur de la couche (92) du matériau composite de sa face avant à sa face arrière.

7. Matériau de protection selon la revendication 6, caractérisé en ce que les inserts (94) sont disposés en direction inclinée par rapport à la normale aux faces avant et arrière de la couche (92) en matériau composite.

FIG.1  FIG.2  FIG.3

FIG.4  FIG.5  FIG.6

FIG.7  FIG.8  FIG.9

Office européen
des brevets

**RAPPORT DE RECHERCHE EUROPEENNE**

Numero de la demande

EP 89 40 3523

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 952 109 (MAN TECHNOLOGIE GmbH) * Le document en entier * | 1,3,4 | F 41 H 5/04 |
| Y | | 2,5-7 | B 32 B 18/00 |
| | --- | | C 04 B 35/80 |
| Y | EP-A-0 287 918 (CEMCOM CORP.) * Revendications 1-47; page 4, ligne 18 - page 7, ligne 52; figures 1-4 * | 2,5-7 | |
| | --- | | |
| A | EP-A-0 244 993 (CORNING GLASS WORKS) * Revendications 1-10 * | 1-7 | |
| | --- | | |
| A | US-A-3 828 699 (D.E. BOWEN) * Revendications 1-10 * | 1-7 | |
| | ----- | | |

DOMAINES TECHNIQUES RECHERCHES (Int. Cl.5)

F 41 H
B 32 B
C 04 B

Le présent rapport a été établi pour toutes les revendications

| Lieu de la recherche | Date d'achèvement de la recherche | Examinateur |
|---|---|---|
| LA HAYE | 14-03-1990 | LUETHE H. |

EPO FORM 1503 03.82 (P0402)